# EUROPEAN PATENT SPECIFICATION

(11) **EP 1 010 451 B1**
(45) Date of publication and mention of the grant of the patent: **30.05.2007**
(21) Application number: 99309396.2
(22) Date of filing: 24.11.1999
(51) Int. Cl.: B01D 46/24, B01D 53/26

(54) **Stack filter assembly**
Filtervorrichtung mit gestapelten Filterelementen
Ensemble filter en superposition

(30) Priority: 25.11.1998 GB 9825684
(43) Date of publication of application: 21.06.2000
(73) Proprietor: BEGG, COUSLAND & CO. LTD., Glasgow G40 3HS, Scotland (GB)
(72) Inventor: Cousland, Graeme Michael, Glasgow G40 3HS (GB); Murdoch, Robert, Glasgow G40 3HS (GB); Seitz, Ekkehard, 60295 Frankfurt am Main (DE); Muellen, Joachim, 60295 Frankfurt am Main (DE)
(74) Representative: Moreland, David

(56) References cited:
- WO-A-94/04246
- WO-A-96/21501
- FR-A- 874 982
- US-A- 4 336 043

## Description

### FIELD OF INVENTION

This invention relates to filter apparatus and in particular, though not exclusively, to filtering apparatus for use in separating fine mist particles from a gas. The invention further relates to a method of operating such a filtering apparatus.

### BACKGROUND TO INVENTION

The invention is particularly concerned with the construction and use of filters of elongate tubular configuration which are normally disposed upright when in use (hereinafter referred to as being "of the type stated"). Typical of such filters is a so-called "fibre filter" or "candle filter" consisting of a fibrous filter bed packed into an annular space between two concentric mesh or open-work cylinders. Gas(es) pass along the cylinders either up or down and either from inside to outside. The gas(es) pass through the filter bed while the liquid particles coalesce, impact, become intercepted or collected by Brownian Diffusion or a combination of these within the filter bed and drain downwards therethrough.

A problem experienced with such filters arises in certain circumstances from a tendency to flood or over-saturate particularly in the vicinity of a lower end of the filter, causing a reduction in filter performance and/or promoting corrosion of metal components in the said vicinity.

An object of the present invention is to provide a construction of filter of the type stated and also to provide a method of operation therefore, in which the aforementioned problem is obviated or mitigated.

WO 94/04246 (MACSANZ) discloses an environmental control system filter purificator. Therein an environmental control filter has a fluid entry pipe, including a forced air inlet extending through axially extended outer shell having a near end cap and distal end cap. The entry pipe has a foraminous inner pipe provided with perforations. A first perforated baffle alternates with a second impervious baffle surrounding the foraminous pipe extending through the outer shell. The outer shell is filled with filler material between the foraminous pipe.

### SUMMARY OF INVENTION

According to a first aspect of the present invention there is provided a scrubbing tower filter apparatus for separating mist or liquid particles from a gas in a scrubbing tower of a plant, the filter apparatus comprising at least first and second fibrous filter beds packed into an annular space between first and second substantially concentric mesh or open-work tubular structures at least one substantially annular member being provided between each adjacent fibrous filter bed, wherein, in use, the filter apparatus is disposed in a substantially vertical orientation, the first and second fibrous filter beds comprising upper and lower fibrous filter beds, respectively, and wherein further there are provided guide means associated with the at least one substantially annular member for guiding liquid such that, in use, the guide means receives liquid draining from the upper fibrous filter bed and discharges such liquid downwards clear of the lower fibrous filter bed.

Each fibrous filter bed may be substantially cylindrical.

The at least first and second fibrous filter beds may comprise at least two substantially concentrically arranged filter beds, wherein, in use, gas or air is caused to pass through the concentrically arranged beds in series or to pass through at least one of the concentrically arranged beds. An annular member may provided at one end of at least one or each concentric bed.

A single annular member may be provided between adjacent ends of adjacent concentric beds.

In one embodiment the first and second concentric mesh or open-work tubular structures may each comprise a single tubular member. In one embodiment the filter apparatus may comprise a single filter body including at least two filter portions.

In an alternative embodiment the first and second concentric mesh or open-work tubular structures may comprise at least first and second tubular members disposed end to end. In the alternative embodiment the filter apparatus may comprise at least two filter portions connected to provide a single filter body.

In the one embodiment the/each annular member may comprise a ring.

The/each ring may be made from a material substantially resistant to corrosion by the mist or liquid particles or by the gas. For example, the ring may be fabricated from a Material selected from stainless steel or a synthetic material such as PTFE or polypropylene.

In the alternative embodiment of two adjacent filter portions at least one end may be provided with an end closure, the end closure providing the annular member.

The filter apparatus may be adapted to hang substantially vertically from a structural member. Alternatively, the filter apparatus may be adapted to stand substantially vertically upon a structural member.

The tubular structures may each comprise a cylinder.

The filter apparatus may include a gas input end and a gas output end, the gas output end optionally including a closure plate thereacross so as to close an inside of the tubular structure.

It will be appreciated that the gas may be caused to pass from an inside to an outside of the filter apparatus or alternatively from an outside to an inside of the filter apparatus.

It will also be appreciated that the gas may be caused to pass either down or up the filter apparatus.

In cases where gas is caused to pass up or down the filter apparatus from an outside, the guide means may comprise a gutter provided on an inside of the tubular structure adjacent the/each annular member.

In cases where gas is caused to pass up or down the filter apparatus from an inside, the guide means may comprise a gutter provided on an outside of the tubular structure adjacent the/each annular member.

The/each gutter may be vertically offset downwardly from the respective annular member.

It will be appreciated that for ease of assembly each annular member may be glued to at least one adjacent fibrous filter bed the glue being substantially resistant to the mist or liquid particles and to the gas.

Alternatively, each annular member may comprise a hardened end of a fibrous filter bed. The end may be hardened by predipping the end in a molten polymer.

The at least one substantially annular member may comprise end structure means providing end closure of the respective annular space.

The upper and lower filter beds may have substantially the same nominal diameter and may be disposed upright and end-to-end, and the at least one substantially annular member may comprise end structure means providing end closure of the respective annular spaces.

The filter apparatus may comprise an end-to-end assembly of filters adapted for use in a scrubbing tower of a plant, the filters being of substantially vertical elongate tubular configuration, wherein mutually adjacent ends are interconnected by annular elements including a flange ring attached to one of the filters having holes on a pitch circle and being axially offset from an end face of said one filter by means of an integral annular collar adjacent the inner diameter of the filter so that fixing elements extending through said holes are accessible on the outside of the filter assembly.

According to a second aspect of the present invention there is provided a scrubbing tower of a plant comprising a scrubbing tower filter apparatus according to the first aspect of the present invention.

The scrubbing tower may comprise a scrubbing tower of a copper smelter, an ammonium nitrate plant, a sulphuric acid plant, or a hydrofluoric acid plant.

According to a third aspect of the present invention there is provided a method of separating mist or liquid particles from a gas in a scrubbing tower of a plant comprising the steps of:
providing a scrubbing tower filter apparatus according to the first aspect of the present invention;
causing the gas including the mist or liquid particles to pass through the filter apparatus either from inside to outside or outside to inside such that the mist or liquid particles are caused to be captured by one of the filter beds.

The method may also comprise the steps of:
causing the gas laden with particles of a liquid to pass substantially horizontally through the filter apparatus so that said particles coalesce, impact, become intercepted or collected by Brownian Diffusion or a combination of these within the filter to form a liquid mass which drains downwards; and
causing the downwards draining liquid to leave the filter apparatus at two or more mutually spaced stations therealong.

The method may also comprise the steps of:
causing a gas laden with particles of a liquid to pass substantially horizontally through each of the filter beds so that said particles coalesce within the filter beds to form a liquid mass which drains downwards; and
causing the draining liquid to leave a lower end of each filter bed and thereafter move clear of the other filter bed(s).

According to a fourth aspect of the present invention there is provided use of a scrubbing tower filter apparatus according to the first aspect of the present invention in separation of mist or liquid particles from a gas in a scrubbing tower of a plant.

According to a fifth aspect of the present invention there is provided a chemical/material processing plant including a scrubbing tower comprising a scrubbing tower filter apparatus according to the first aspect of the present invention.

In operating previously proposed filters of the type stated, all of the residual liquid moves from the filter or filter assembly by way of the lower end of the lowermost filter in an end-to-end assembly of two or more filters. In accordance with the present invention, the movement of the residual liquid from the filter or filter assembly is distributed with respect to the total length of the filter or filter assembly. Such distribution reduces any tendency to flood or over-saturate part of the filter or filter assembly. It is now therefore feasible to operate filters of the type stated having a relatively increased total length dimension without any consequential impairment of filter performance.

Certain filters of the type stated are inserted into associated filter supports or housings or casings through circular apertures with relatively small clearance. Thus, part of the aforesaid end structure means with the aforesaid guide means must be capable of passage through such circular apertures in the case where a conventional filter is to be replaced with a filter in accordance with the present invention. Moreover, where the inside diameter of the filter is not sufficient to provide operative access for end-to-end assembly using internally accessible fixing elements, there arises a difficulty of achieving end-to-end assembly using externally-accessible fixing elements without exceeding the external diametral limits dictated by the said aperture.

### BRIEF DESCRIPTION OF DRAWINGS

Embodiments of the present invention will now be described by way of example with reference to the accompanying drawings which are:
- **Figure 1**: a sectional side elevation of a filter assembly in accordance with a first embodiment of the present invention;
- **Figure 2**: a partial perspective elevation of an outer cage assembly of the filter assembly of Figure 1;
- **Figure 3**: a partial perspective elevation of an inner cage assembly of the filter assembly of Figure 1;
- **Figure 4**: a cross-sectional side elevation of a filter assembly in accordance with a second embodiment of the present invention;
- **Figure 5**: a cross-sectional side elevation of a filter assembly in accordance with a third embodiment of the present invention;
- **Figure 6**: a cross-sectional side elevation of part of a filter assembly in accordance with a fourth embodiment of the present invention, similar to the filter assembly of Figure 5;
- **Figure 7**: a partial cross-sectional side elevation of part of a filter assembly similar to the filter assembly of Figure 4, but showing a modification thereof;
- **Figure 8**: a partial cross-sectional side elevation of part of a filter assembly similar to the filter assembly of Figure 5 but showing a modification thereof; and
- **Figure 9**: a fragmented view in the direction of arrow A of the filter assembly of Figure 8.

### DETAILED DESCRIPTION OF EMBODIMENTS

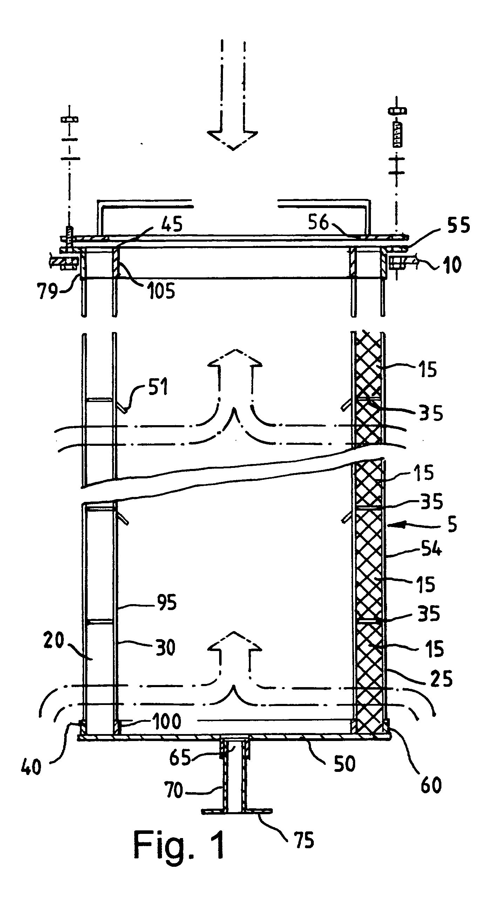

Referring firstly to Figure 1, there is shown a filter apparatus according to a first embodiment of the present invention comprising a filter assembly, generally designated 5. In this embodiment the filter assembly 5 is hung substantially vertically from part of chemical processing installation (not shown), the part being identified by reference numeral 10.

The part 10 is a portion of a housing or casing, and supports the filter assembly 5 for treating gas moving from a lower outside end of the housing 10. The gas flow is indicated by the broad arrows shown in chain dotted outline. The duty of the filter assembly 5 is to remove fine mist particles from the gas. The filter assembly includes a plurality of - in this case four - fibrous filter beds 15 which are of the type known as "fibre filters". The mechanism of fibre filters is well known and is basically a combination of impingement for particles greater than 1-2 microns in diameter, and diffusion for the finer particles where Brownian motion becomes increasingly predominant. As the gas passes through each filter bed 15, the small mist particles are bombarded by the gas molecules surrounding them, causing them to move in various directions towards and away from the surface and fibres making up the filter bed 15.

The filter assembly 5 comprises four fibrous filter beds 15 packed into an annular space 20 between first and second substantially concentric mesh or open-work tubular structures 25,30 at least one annular member 35 being provided between adjacent fibrous filter beds 15. In this embodiment the first and second concentric mesh or open-work tubular structures 25, 30 each comprise a single tubular member in the form of a cylinder. Thus, the filtering assembly 5 comprises a single filter body including four filter portions.

Each annular member 35 comprises a ring. Each ring is made from a suitable material resistant to corrosion by the mist or liquid particles or by the gas. For example, the ring may be fabricated from stainless steel or from any suitable synthetic material such as PTFE or polypropylene. In this embodiment the rings are loosely retained on the assembly 5; however, in a modification the rings could be retained in association with the mesh structures 25, 30, e.g. by welds.

The filter assembly 5 includes a gas input end 40 and a gas output end 40, the gas input 45 including a closure plate 50 thereacross so as to close an inside of the tubular structures 25,30.

In this embodiment it will be appreciated that the gas is caused to pass from an outside to an inside, up the filter assembly 5.

In this case, an annular gutter 51, can be provided in the inside of the tubular structure 30 adjacent each annular member 35. As can be seen from Figure 1, each gutter 51 is vertically offset downwardly from the respective annular member 35.

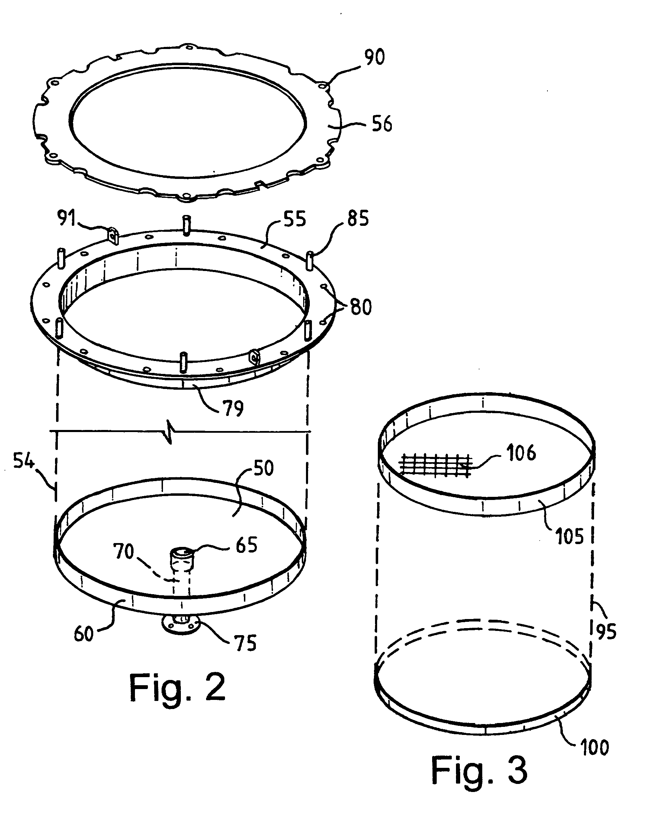

Referring now to Figure 2, there is shown a partial perspective elevation of an outer cage assembly 53 of the filter assembly 5 with the first mesh structure 25 removed. It can be seen from Figure 2 that the outer cage assembly comprises the closure plate 50, a top flange plate 55 and a compression plate 56. The closure plate 50 includes a circumferential upstanding collar 60 and a substantially centrally located drainage hole 65 threadably connected to a drainage tube 70 carrying a flange 75 at a distal end. The top flange plate 55 includes a downwardly depending collar 79 and a plurality of substantially equally spaced apertures 80 which may be aligned with a plurality of the spaced apertures (not shown) provided on the structural member 10, so as to allow the filter assembly 5 to be retained in association with the structural member 10, e.g. by bolts or studs (not shown) passing through the aligned holes. The top flange plate 55 also carries a plurality of upstanding rods 85 capable of reception into a plurality of apertures 90 in the compression plate 56. The top flange plate 55 further carries two opposing lifting lugs 91. A gasket - e.g. a PTFE gasket - (not shown) may be provided between the assembled compression plate 56 and flange plate 55. The closure plate 50 and the flange plate 55 may be secured to the mesh structure 25 by any suitable means, e.g. welds.

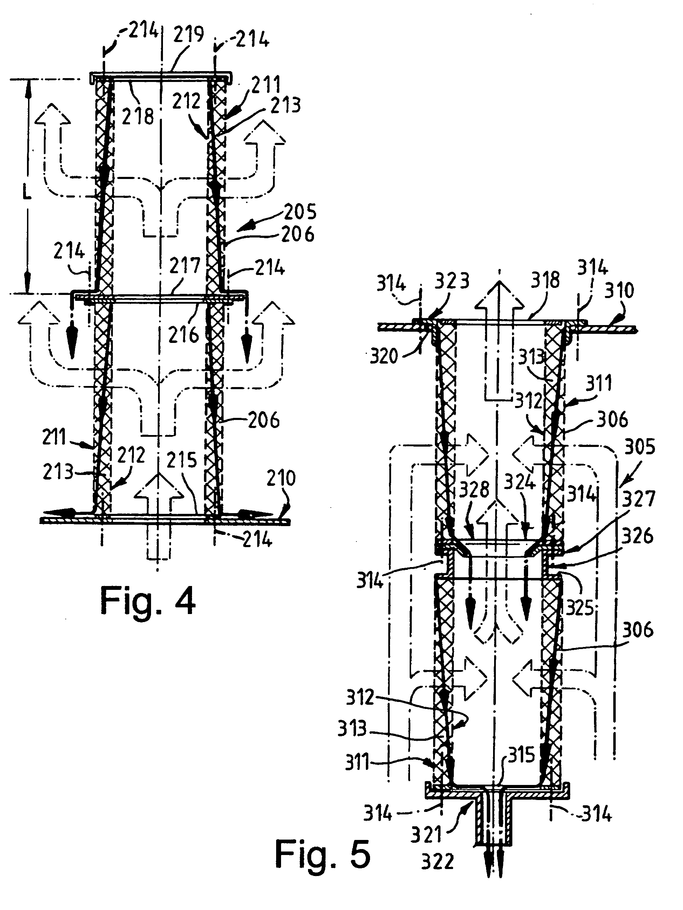

Referring now to Figure 3, there is shown a partial perspective elevation of an inner cage assembly 95 of the filter assembly 5 with the second mesh structure 30 removed. As can be seen from Figure 3, the inner cage assembly 95 comprises a bottom ring 100 and a top ring 105 carrying a mesh closure disc 106 thereacross. The rings 100, 105 may be retained at respective ends of the second mesh structure 30 by suitable means, e.g. welds.

The various components of the outer and inner cage assembles 53, 95 may be made from suitably resistant materials, e.g. stainless steel or alternatively titanium, glass reinforced plastics (e.g. with a resin coating particularly for use in chlorine plants) or a high nickel alloy.

The filter assembly 5 of the present invention may be adapted for use in many applications, for example, a scrubbing tower of a copper smelter, an ammonium nitrate plant, a sulphuric acid plant, or a hydrofluoric acid plant.

It will be appreciated that for ease of assembly of the filter assembly 5, each annular member 35 may be glued to at least one adjacent fibrous filter bed provided that such glue is resistant to the mist or liquid particles and to the gas.

Alternatively, each annular member 35 may comprise a hardened end of a fibrous filter bed 15. The end may be hardened, for example, by predipping the end in a molten polymer.

In use, gas carrying mist or liquid particles are caused to pass up the assembly 5 from outside to inside, thereby causing mist or liquid to be caught in the assembly 5. Liquid caught in each bed 15, drains down the bed 15 to the annular member 35 at the bottom of the bed 15 thereby causing the liquid to be diverted from entering the next lowest bed 35. If no gutter 51 is provided the liquid caught by the bed 15 is caused to flow down the inner surface of the next lowest and subsequent beds 15. In this way the annular rings 35 tend to obviate or mitigate saturation of the beds 15. If a gutter 51 is provided then liquid draining from a bed 15 is tended to be directed inwardly away from lower beds 15.

Typically, the velocity of gas flow through the beds 15 will be around 0.15 m/s and normally not above 0.2 m/s with a relatively high liquid loading, e.g. around 1 to 25 g/m³ of gas. Further adjacent annular members 35 may be spaced by between 1m and 10m and typically 3m or 6m. It is envisaged that the filter assembly 5 could pass 0.0345 m³/h of gas as compared to 0.0129 m³/h for a conventional candle filter.

Referring now to Figure 4 there is shown a filter assembly 205 according to a second embodiment of the present invention. The filter assembly 205 is supported by a part 210 of a chemical processing installation (not shown). The assembly 205 includes a plurality of filter beds 206.

Each individual filter bed 206 is of elongate tubular construction, consisting of concentric outer and inner wire mesh cages 211 and 212 respectively with fibrous filter-bed medium 213 packed into an annular space defined by the cages 211, 212. The ends of the annular spaces between the cages 211, 212 are closed by end structure means as described in further detail hereunder. The length L of each filter is approximately four metres; the internal diameter of the inner cage 212 is approximately 50 centimetres; and the width of the annular space between the cages 211, 212 is approximately 5 centimetres.

The lower filter bed 206 in Figure 4 is secured to the housing 210 by fixing means 214 (typically screws, bolts or studs) extending through mating holes in the housing 210 and a flange ring 215 constituting lower end structure means of the lower filter bed 206. The upper end of the lower filter bed 206 is provided with a relatively wide flange ring 216 constituting top end structure means closing the annular space of the lower filter bed 206. In the upper filter bed 206 of Figure 4, end structure means consists of a lower flange ring 217 which is secured to the flange ring 216 by fixing means 214. A gasket or seal (not shown) would, in practice, be typically provided between the flange rings 216, 217. The flange ring 217 has an external diameter large enough to ensure that the peripheral edge of the flange ring 217 is disposed clear of the lower filter as explained further herebelow. End structure means at an upper end of an upper filter bed 206, is constituted by a flange ring 218 and top cover 219 with a seal or gasket (not shown) secured by fixing means 214.

In operation of the filter assembly 205 of Figure 4, although the gas flow velocity is low and the pressure difference across the filter medium is low, nevertheless the inside-to-outside gas flow induces a drainage pattern as shown by the heavy lines running from inside to outside in the upper and lower filter elements. Thus, drainage of liquid at the lower end of each filter tends to flow outwardly at the bottom portion of each filter. With the arrangement shown in Figure 4, drainage from the upper filter element leaves the filter assembly 205 at the level of the flange ring 217, and is discharged clear of the lower filter from the outer periphery of flange ring 217. Thus, the liquid mass collected by the upper filter is not passed on to the lower filter, and in this way flooding or over-saturation of the lower filter is avoided.

In Figure 5, there is shown a filter assembly 305 according to a third embodiment of the present invention, components corresponding with those in Figure 4 being given the same reference numerals, but increased by "100". In Figure 5, the filter assembly 305 is inserted downwards through an aperture 320 in a housing 310, and gas flow enters the filter assembly 305 from outside to inside below the aperture 320, and emerges from the housing 310 above the aperture 320.

In Figure 5, the upper and lower filter elements are identical with those in Figure 4. In Figure 5, lowermost flange ring 315 is secured to a lower end cover 321 provided with a liquid drainage outlet 322 associated with a drainage duct (not shown) which is isolated from the gas within the housing 310. The upper end of the filter assembly 305 in Figure 5 is provided with an annular mounting ring 323, which is welded to outer cage 311 of the upper filter element and also to the flange ring 318. The filter assembly 305 is secured to the housing 310 by fixing means 314 in a conventional manner.

A lower end of the upper filter in Figure 5 is provided with a simple flange ring 324 provided with holes for fixing means 314. The lower filter element in Figure 5 has upper end structure means in the form of an annular flange 325 which itself closes the annular space at the upper end of the lower filter element. The flange 325, has its inner diameter integral with an annular collar 326 which, in turn, is integral with a further annular flange 327 provided with holes on a pitched circle for the fixing means 314. Thus, the flange 327 is offset with respect to an upper end of the lower filter providing external access to the fixing means 314. With this arrangement, it is possible to assemble the upper and lower filter elements whilst they are vertically suspended by means of an on-site crane or lifting apparatus prior to insertion through the aperture 320.

Between the flange ring 324 and the flange 327, there is secured a guide means in the form of a dished flange 328 which serves to discharge liquid draining from the upper filter clear of the lower filter in the manner explained with reference to Figure 4. Whereas, in Figure 5, the liquid guide means as mentioned is provided by a separate flange ring 328, in the embodiment of Figure 4 the liquid guide means is constituted by the outer portion of the flange ring 217.

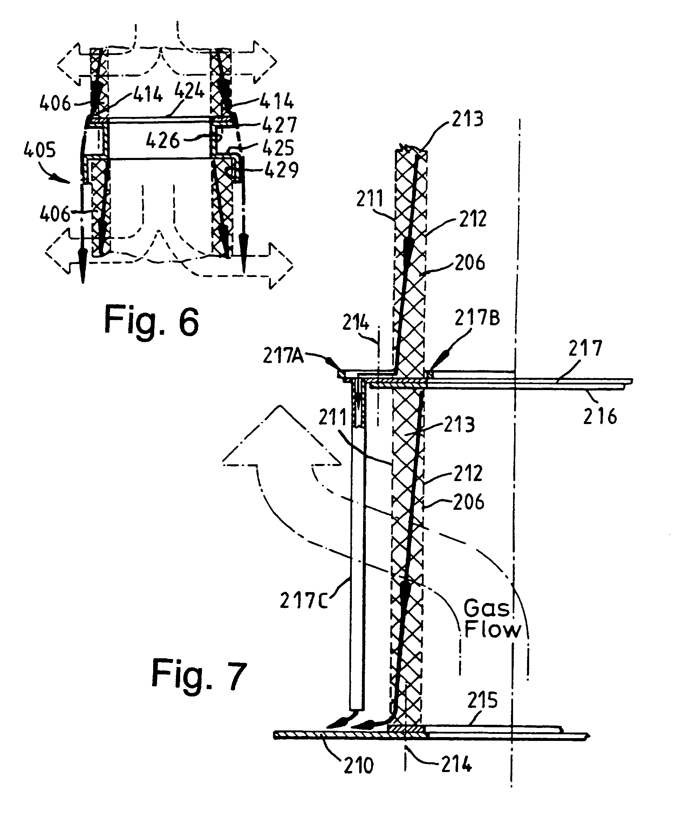

In Figure 6, the structure shown is almost identical with that of Figure 5, except that the dished flange ring or guide means 328 is omitted in Figure 6 and replaced by a liquid guide collar 429 which is welded to the outer peripheral edge of the flange 425 and shrouds the upper end portion of the lower filter bed. In Figure 6, the gas flow direction is reversed as compared with that in Figure 5, so that drainage from the upper filter element is from inside to outside at the lower end thereof. Thus, liquid draining from the upper filter element drops to the outside of the flange rings 427 and 425 and is then guided by the collar 429 to drop clear of the lower filter element.

In the arrangements described above, it will be noted that the liquid which is discharged clear of a lower filter falls through de-misted gas issuing from the lower filter. Thus, in conditions of high mist loading and/or irrigation, there is the possibility that some of the liquid falling clear of the lower filter may be re-entrained in the flow of "clean" gas. This possibility of re-entrainment is substantially avoided by means of the modifications which will now be described with reference to Figures 7 to 9 in which parts corresponding with parts in Figures 4 and 5 are given the reference numerals used in Figures 4 and 5.

In Figure 7, the outer periphery of the flange ring 217 is provided with an upstand 217A. Also, the inner periphery of the flange ring 217 is provided with an upstand 217B. The upstands 217A and 217B define an annular channel or trough of depth sufficient only to retain a layer of liquid draining from the upper filter bed 213. One or more tubular ducts 217C, each typically of 10 mm diameter bore, communicate with apertures in the flange ring 217 so that the liquid thereon is discharged through the tube or tubes 217C which are of length sufficient to carry the discharging liquid to the vicinity of the lower end of the lower filter bed 213. Thus, the liquid discharging from the upper filter bed 213 is carried through the de-misted gas issuing from the lower filter bed 213 without risk of re-entrainment.

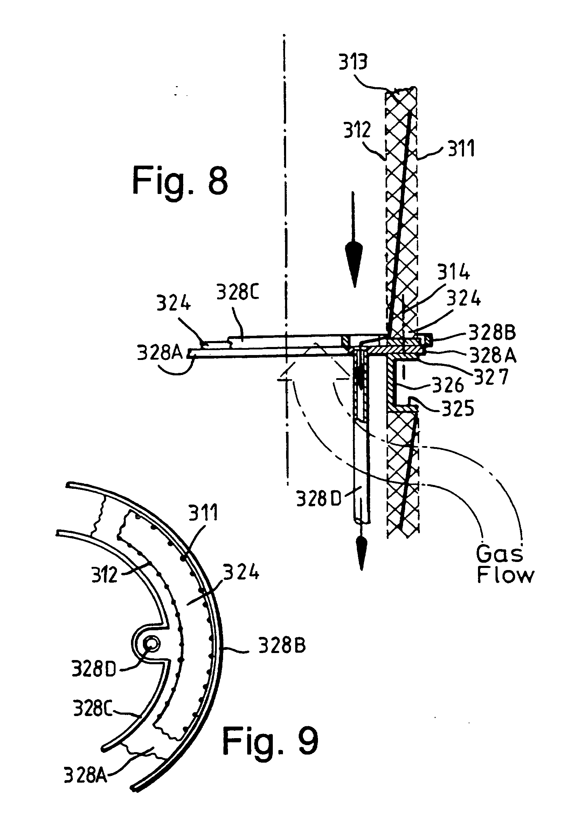

In Figures 8 and 9, the construction shown illustrates how the principle of Figure 7 can be used in the case where the gas flow is from the outside to the inside of the lower filter bed, and with minimal obstruction to gas flow through the vicinity of the connection between the lower and upper filter beds 313. In Figures 8 and 9, as compared with Figure 5, the dished annular guide ring 328 is replaced by a plain annular flange ring 328A having an outer peripheral upstand 328B and an inner peripheral upstand 328C, thus forming a shallow channel or trough for retaining a layer of liquid draining from the upper filter bed 313. In order to present minimum obstruction to flow of gas upwards through the filter assembly 305, the flange ring 328A is shaped as can be seen in Figure 9 to provide at least one inwardly projecting portion for accommodating a guide tube 328D. The upstand 328C is shaped to match the inner profile of the flange ring 328A.

It will be appreciated that the embodiments of the present invention hereinbefore described are given by way of example only, and are not meant to limit the scope of the invention in any way. Particularly, it will be understood that the present invention is of particular benefit in situations of high liquor loadings, i.e. high mist/liquid levels in the gas, e.g. above 5,000 mg/m³ and particularly around 25000 mg/m³ liquid/gas.

Further modifications of the constructions described above falling within the scope of the present invention include the use of three or more filter elements in a filter assembly. Also, it will be understood that the parameters of length and nominal diameter of filter elements place no limitation on the inventive drainage method.

In a modification, for example, one of or each fibrous filter bed may comprise at least two substantially concentrically arranged filter beds, wherein, in use gas or air is caused to pass through the concentrically arranged beds in series or to pass through at least one of the concentrically arranged beds. In such an arrangement an annular member may be provided at an end of one or more or each concentric bed. Alternatively, a single annular member may be provided at adjacent ends of adjacent concentric beds.

It will further be appreciated that the annular member or "ring" may not only space adjacent fibrous filter beds but may also provide structural/mechanical support to the filter apparatus. This is envisaged to be of particular note in so-called high velocity filters.

Particularly, whereas a primary function of the annular members is to enhance the drainage rate of the liquid collected in the fibrous filter bed, there sometimes exists a need to divide a fibrous filter bed used in applications of relatively high gas velocity or in applications whose nature is corrosive to the fibrous filter bed, primarily to give added structural and mechanical support to the fibrous filter bed over its length. Such a use of the annular members may thus act to increase the drainage rate of liquid from the fibrous filter bed, though the increased drainage rate may not be required or inherently beneficial. The inclusion of such mechanical support annular members, thus having the same implied benefits as those specifically included for the purpose of drainage, would most likely be singular in filters of less than 1000 to 1220mm long and multiple in filters of greater than 1000 to 1220mm long, and are not solely included for the purpose of connecting two or more sections of fibrous filter bed of lengths greater than 2000mm each.

## Claims

1. A scrubbing tower filter apparatus (5;205;305;405) for separating mist or liquid particles from a gas in a scrubbing tower of a plant, the filter apparatus comprising at least first and second fibrous filter beds (15;206;306;406) packed into an annular space (20) between first and second substantially concentric mesh or open-work tubular structures (25,30), at least one substantially annular member (35) being provided between each adjacent fibrous filter bed (15;206;306;406), wherein, in use, the filter apparatus (5;205;305;405) is disposed in a substantially vertical orientation, the first and second fibrous filter beds (15;206;306;406) comprising upper and lower fibrous filter beds, respectively, and wherein further there are provided guide means (51,317,328,294,429) associated with the at least one substantially annular member (35) for guiding liquid such that, in use, the guide means (51,317,328,294,429) receives liquid draining from the upper fibrous filter bed (15,206,306,406) and discharges such liquid downwards clear of the lower fibrous filter bed (15,206,306,406).

2. A filter apparatus (5;205;305;405) as claimed in claim 1, wherein each fibrous filter bed (15;206;306;406) is substantially cylindrical.

3. A filter apparatus (5;205;305;405) as claimed in any preceding claim, wherein the at least first and second fibrous filter beds (15;206;306;406) comprise at least two substantially concentrically arranged filter beds wherein, in use, gas or air is caused to pass through the concentrically arranged beds in series or to pass through at least one of the concentrically arranged beds.

4. A filter apparatus (5;205;305;405) as claimed in claim 3, wherein an annular member (35;216;325;425) is provided at one end of at least one or each concentric bed.

5. A filter apparatus (5;205;305;405) as claimed in claim 3, wherein a single annular member (35) is provided between adjacent ends of adjacent concentric beds.

6. A filter apparatus (5;205;305;405) as claimed in any preceding claim, wherein the first and second concentric mesh or open-work tubular structures (25,30), each comprise a single tubular member.

7. A filter apparatus (5;205;305;405) as claimed in claim 6, wherein the filter apparatus comprises a single filter body including at least two filter portions.

8. A filter apparatus (5;205;305;405) as claimed in any of claims 1 to 5, wherein the first and second concentric mesh or open-work tubular structures (25,30) each comprise at least first and second tubular members disposed end to end.

9. A filter apparatus (5;205;305;405) as claimed in any of claims 1 to 5, wherein the filter apparatus (5;205;305;405) comprises at least two filter portions connected to provide a single filter body.

10. A filter apparatus (5;205;305;405) as claimed in claim 6, wherein the/each annular member (35) comprises a ring.

11. A filter apparatus (5;205;305;405) as claimed in claim 10, wherein the/each ring (35) is made from a material substantially resistant to corrosion by the mist or liquid particles or by the gas.

12. A filter apparatus (5;205;305;405) as claimed in claim 11, wherein the ring (35) is fabricated from a material selected from stainless steel or a synthetic material such as PTFE or polypropylene.

13. A filter apparatus (5;205;305;405) as claimed in either of claims 7 or 9, wherein of two adjacent filter portions at least one end is provided with an end closure, the end closure providing the annular member (325;425).

14. A filter apparatus (5;205;305;405) as claimed in any of claims 1 to 13, wherein the filter apparatus (5;305) is adapted to hang substantially vertically from a structural member (10;310).

15. A filter apparatus (5;205;305;405) as claimed in any of claims 1 to 13, wherein the filter apparatus (205) is adapted to stand substantially vertically upon a structural member (210).

16. A filter apparatus (5;205;305;405) as claimed in any preceding claim, wherein the tubular structures (25,30) each comprise a cylinder.

17. A filter apparatus (5;205;305;405) as claimed in any preceding claim, wherein the filter apparatus (5;205;305;405) includes a gas input end and a gas output end, the gas output end optionally including a closure plate (50; 321) thereacross so as to close an inside of the tubular structure.

18. A filter apparatus (5;205;305;405) as claimed in any of claims 1 to 17, wherein where gas is caused to pass up or down the filter apparatus (5;205;305;405) from an outside, the guide means comprises a gutter (51) provided on an inside of the tubular structure adjacent the/each annular member (35).

19. A filter apparatus (5;205;305;405) as claimed in any of claims 1 to 17, wherein where gas is caused to pass up or down the filter apparatus (5;205;305;405) from an inside, the guide means comprises a gutter (217) provided on an outside of the tubular structure adjacent the/each annular member (217).

20. A filter apparatus (5;205;305;405) as claimed in either of claims 18 or 19, wherein the/each gutter (51;217) is vertically offset downwardly from the respective annular member (35).

21. A filter apparatus (5;205;305;405) as claimed in any preceding claim, wherein each annular member (35) is glued to at least one adjacent fibrous filter bed (15), the glue being substantially resistant to the mist or liquid particles and to the gas.

22. A filter apparatus (5;205;305;405) as claimed in any of claims 1 to 20, wherein each annular member (35) comprises a hardened end of a fibrous filter bed(15).

23. A filter apparatus (5;205;305;405) as claimed in claim 22, wherein the end is hardened by predipping the end in a molten polymer.

24. A filter apparatus as claimed in claim 1, wherein the at least one substantially annular member comprises end structure means (217;325;425) providing end closure of the respective annular space.

25. A filter apparatus as claimed in claim 1, wherein the upper and lower filter beds (206;306;406) have substantially the same nominal diameter and are disposed upright and end-to-end, and the at least one substantially annular member comprises end structure means providing end closure of the respective annular spaces.

26. A filter apparatus as claimed in claim 1, comprising an end-to-end assembly (205;305;405) of filters adapted for use in a scrubbing tower of a plant, the filters being of substantially vertical elongate tubular configuration, wherein mutually adjacent ends are interconnected by annular elements including a flange ring (217;327;427) attached to one of the filters having holes on a pitch circle and being axially offset from an end face of said one filter by means of an integral annular collar adjacent the inner diameter of the filter so that fixing elements extending through said holes are accessible on the outside of the filter assembly (205;305;405).

27. A scrubbing tower of a plant comprising a scrubbing tower filter apparatus (5;205;305;405) according to any of claims 1 to 26.

28. A scrubbing tower as claimed in claim 27, wherein the scrubbing tower comprises a scrubbing tower of a copper smelter, an ammonium nitrate plant, a sulphuric acid plant, or a hydrofluoric acid plant.

29. A method of separating mist or liquid particles from a gas in a scrubbing tower comprising the steps of:
providing a scrubbing tower filter apparatus (5;205;305;405) according to any of claims 1 to 26;
causing the gas including the mist or liquid particles to pass through the filter apparatus (5;205;305;405) either from inside to outside or outside to inside such that the mist or liquid particles are caused to be captured by one of the filter beds (15;206;306;406).

30. A method according to claim 29 comprising the steps of:
causing the gas laden with particles of a liquid to pass substantially horizontally through the filter apparatus so that said particles coalesce, impact, become intercepted or collected by Brownian Diffusion or a combination of these within the filter to form a liquid mass which drains downwards; and
causing the downwards draining liquid to leave the filter apparatus at two or more mutually spaced stations therealong.

31. A method according to claim 29 comprising the steps of:
causing a gas laden with particles of a liquid to pass substantially horizontally through each of the filter beds so that said particles coalesce within the filter beds to form a liquid mass which drains downwards; and
causing the draining liquid to leave a lower end of each filter bed and thereafter move clear of the other filter bed(s).

32. Use of a scrubbing tower filter apparatus (5;205;305;405) according to any of claims 1 to 26 in separation of mist or liquid particles from a gas in a scrubbing tower of a plant.

33. A chemical/material processing plant including a scrubbing tower comprising a scrubbing tower filter apparatus according to any of claims 1 to 26.

## Patentansprüche

1. Waschturm-Filtervorrichtung (5; 205; 305; 405) zum Abscheiden von Nebel- oder Flüssigkeitsteilchen aus einem Gas in einem Waschturm einer Anlage, wobei die Filtervorrichtung wenigstens eine erste und eine zweite Gewebefiltermittelschicht (15; 206; 306; 406), gepackt in einen ringförmigen Raum (20) zwischen einer ersten und einer zweiten wesentlich konzentrischen Maschen- oder durchbrochenen röhrenförmigen Struktur (25, 30), umfasst, wobei wenigstens ein wesentlich ringförmiges Element (35) jeweils zwischen benachbarten Gewebefiltermittelschichten (15; 206; 306; 406) bereitgestellt wird, wobei die Filtervorrichtung (5; 205; 305; 405) bei Anwendung in einer wesentlich vertikalen Ausrichtung angeordnet ist, wobei die erste und die zweite Gewebefiltermittelschicht (15; 206; 306; 406) jeweils obere und untere Gewebefiltermittelschichten umfassen, und wobei ferner dem wenigstens einen wesentlich ringförmigen Element (35) zugeordnete Führungsmittel (51, 317, 328, 294, 429) bereitgestellt werden, um eine Flüssigkeit zu führen derart, dass die Führungsmittel (51, 317, 328, 294, 429) eine aus der oberen Gewebefiltermittelschicht (15; 206; 306; 406) ablaufende Flüssigkeit aufnehmen und eine solche Flüssigkeit nach unten weg von der unteren Gewebefiltermittelschicht (15; 206; 306; 406) ableiten.

2. Filtervorrichtung (5; 205; 305; 405) nach Anspruch 1, wobei jede Gewebefiltermittelschicht (15; 206; 306; 406) wesentlich zylindrisch ist.

3. Filtervorrichtung (5; 205; 305; 405) nach einem der vorhergehenden Ansprüche, wobei die wenigstens erste und zweite Gewebefiltermittelschicht (15; 206; 306; 406) wenigstens zwei wesentlich konzentrisch angeordnete Filtermittelschichten umfassen, wobei bei Anwendung ein Gas oder Luft veranlasst wird, in Reihe durch die konzentrisch angeordneten Schichten hindurchzugehen oder durch wenigstens eine der konzentrisch angeordneten Schichten hindurchzugehen.

4. Filtervorrichtung (5; 205; 305; 405) nach Anspruch 3, wobei an einem Ende wenigstens einer oder jeder konzentrisch angeordneten Schicht ein ringförmiges Element (35; 216; 325; 425) bereitgestellt wird.

5. Filtervorrichtung (5; 205; 305; 405) nach Anspruch 3, wobei zwischen den benachbarten Enden benachbarter konzentrischer Schichten ein einzelnes ringförmiges Element (35) bereitgestellt wird.

6. Filtervorrichtung (5; 205; 305; 405) nach einem der vorhergehenden Ansprüche, wobei die erste und die zweite konzentrische Maschen- oder durchbrochene röhrenförmige Struktur (25, 30) jeweils ein einzelnes ringförmiges Element umfassen.

7. Filtervorrichtung (5; 205; 305; 405) nach Anspruch 6, wobei die Filtervorrichtung einen einzelnen Filterkörper, der wenigstens zwei Filterabschnitte einschließt, umfasst.

8. Filtervorrichtung (5; 205; 305; 405) nach einem der Ansprüche 1 bis 5, wobei die erste und die zweite konzentrische Maschen- oder durchbrochene röhrenförmige Struktur (25, 30) jeweils wenigstens ein erstes und ein zweites röhrenförmiges Element umfassen, die Ende an Ende angeordnet sind.

9. Filtervorrichtung (5; 205; 305; 405) nach einem der Ansprüche 1 bis 5, wobei die Filtervorrichtung (5; 205; 305; 405) wenigstens zwei Filterabschnitte umfasst, die verbunden sind, um einen einzelnen Filterkörper bereitzustellen.

10. Filtervorrichtung (5; 205; 305; 405) nach Anspruch 6, wobei das/jedes ringförmige Element (35) einen Ring umfasst.

11. Filtervorrichtung (5; 205; 305; 405) nach Anspruch 10, wobei der/jeder Ring (35) aus einem Material hergestellt ist, das wesentlich beständig gegen Korrosion durch die Nebel- oder Flüssigkeitsteilchen oder durch das Gas ist.

12. Filtervorrichtung (5; 205; 305; 405) nach Anspruch 11, wobei der Ring (35) aus einem Material gefertigt ist, das ausgewählt ist aus rostfreiem Stahl oder einem synthetischen Material, wie beispielsweise PTFE oder Polypropylen.

13. Filtervorrichtung (5; 205; 305; 405) nach einem der Ansprüche 7 oder 9, wobei von zwei benachbarten Filterabschnitten wenigstens einer mit einem Endverschluss versehen ist, wobei der Endverschluss das ringförmige Element (325; 425) bereitstellt.

14. Filtervorrichtung (5; 205; 305; 405) nach einem der Ansprüche 1 bis 13, wobei die Filtervorrichtung (5; 305) dafür eingerichtet ist, wesentlich in Vertikalrichtung an einem Strukturelement (10; 310) zu hängen.

15. Filtervorrichtung (5; 205; 305; 405) nach einem der Ansprüche 1 bis 13, wobei die Filtervorrichtung (205) dafür eingerichtet ist, wesentlich in Vertikalrichtung auf einem Strukturelement (210) zu stehen.

16. Filtervorrichtung (5; 205; 305; 405) nach einem der vorhergehenden Ansprüche, wobei die röhrenförmigen Strukturen (25, 30) jeweils einen Zylinder umfassen.

17. Filtervorrichtung (5; 205; 305; 405) nach einem der vorhergehenden Ansprüche, wobei die Filtervorrichtung (5; 205; 305; 405) ein Gaseingangsende und ein Gasausgangsende einschließt, wobei das Gasausgangsende wahlweise eine Verschlussplatte (50; 321) über dasselbe einschließt, um so eine Innenseite der röhrenförmigen Struktur zu verschließen.

18. Filtervorrichtung (5; 205; 305; 405) nach einem der Ansprüche 1 bis 17, wobei, wenn ein Gas veranlasst wird, die Filtervorrichtung (5; 205; 305; 405) von einer Außenseite aufwärts oder abwärts zu passieren, das Führungsmittel eine Rinne (51) umfasst, die an einer Innenseite der röhrenförmigen Struktur angrenzend an das/jedes ringförmige Element (35) bereitgestellt wird.

19. Filtervorrichtung (5; 205; 305; 405) nach einem der Ansprüche 1 bis 17, wobei wenn ein Gas veranlasst wird, die Filtervorrichtung (5; 205; 305; 405) von einer Innenseite aufwärts oder abwärts zu passieren, das Führungsmittel eine Rinne (217) umfasst, die an einer Außenseite der röhrenförmigen Struktur angrenzend an das/jedes ringförmige Element (216) bereitgestellt wird.

20. Filtervorrichtung (5; 205; 305; 405) nach einem der Ansprüche 18 oder 19, wobei die/jede Rinne (51; 217) in Vertikalrichtung nach unten vom jeweiligen ringförmigen Element (35) versetzt ist.

21. Filtervorrichtung (5; 205; 305; 405) nach einem der vorhergehenden Ansprüche, wobei jedes ringförmige Element (35) an wenigstens eine benachbarte Gewebefiltermittelschicht (15) geklebt ist, wobei der Kleber wesentlich beständig gegen die Nebel- oder Flüssigkeitsteilchen oder gegen das Gas ist.

22. Filtervorrichtung (5; 205; 305; 405) nach einem der Ansprüche 1 bis 20, wobei jedes ringförmige Element (35) ein gehärtetes Ende einer Gewebefiltermittelschicht (15) umfasst.

23. Filtervorrichtung (5; 205; 305; 405) nach Anspruch 22, wobei das Ende durch Vortauchen des Endes in ein geschmolzenes Polymer gehärtet ist.

24. Filtervorrichtung (5; 205; 305; 405) nach Anspruch 1, wobei das wenigstens eine wesentlich ringförmige Element Endstrukturmittel (217; 325; 425) umfasst, die einen Endverschluss des jeweiligen ringförmigen Raumes bereitstellen.

25. Filtervorrichtung nach Anspruch 1, wobei die obere und die untere Filtermittelschicht (206; 306; 406) wesentlich den gleichen Nenndurchmesser haben und aufrecht und Ende an Ende angeordnet sind und das wenigstens eine wesentlich ringförmige Element Endstrukturmittel umfasst, die einen Endverschluss der jeweiligen ringförmigen Räume bereitstellen.

26. Filtervorrichtung nach Anspruch 1, die eine Baugruppe (205; 305; 405) von Filtern Ende an Ende umfasst, eingerichtet zur Verwendung in einem Waschturm einer Anlage, wobei die Filter eine wesentlich vertikale längliche röhrenförmige Konfiguration haben, wobei einander benachbarte Enden durch ringförmige Elemente miteinander verbunden sind, die einen an einem der Filter befestigten Flanschring (217; 327; 427) einschließen, der Löcher auf einem Lochkreis hat und mit Hilfe eines integralen ringförmigen Bundes angrenzend an den Innendurchmesser des Filters in Axialrichtung von einer Endfläche des einen Filters versetzt ist, so dass Befestigungselemente, die sich durch die Löcher erstrecken, an der Außenseite der Filterbaugruppe (205; 305; 405) zugänglich sind.

27. Waschturm einer Anlage, der eine Waschturm-Filtervorrichtung (5; 205; 305; 405) nach einem der Ansprüche 1 bis 26 umfasst.

28. Waschturm nach Anspruch 27, wobei der Waschturm einen Waschturm einer Kupferschmelze, einer Ammoniumnitratanlage, einer Schwefelsäureanlage oder einer Fluorwasserstoffsäureanlage umfasst

29. Verfahren zum Abscheiden von Nebel- oder Flüssigkeitsteilchen aus einem Gas in einem Waschturm, das folgende Schritte umfasst:
Bereitstellen einer Waschturm-Filtervorrichtung (5; 205; 305; 405) nach einem der Ansprüche 1 bis 26,
Veranlassen, dass das Gas, das die Nebel- oder Flüssigkeitsteilchen einschließt, entweder von innen nach außen oder von außen nach innen durch die Filtervorrichtung (5; 205; 305; 405) hindurchgeht derart, dass veranlasst wird, dass die Nebel- oder Flüssigkeitsteilchen durch eine der Filtermittelschichten (15; 206; 306; 406) aufgefangen werden.

30. Verfahren nach Anspruch 29, das folgende Schritte umfasst:
Veranlassen, dass das mit den Teilchen einer Flüssigkeit beladene Gas wesentlich in Horizontalrichtung durch die Filtervorrichtung hindurchgeht, so dass die Teilchen innerhalb der Filter zusammenwachsen, aufprallen, aufgefangen oder durch Brownsche Diffusion gesammelt werden oder eine Kombination derselben, um eine flüssige Masse zu bilden, die nach unten abläuft, und
Veranlassen, dass die nach unten ablaufende Flüssigkeit die Filtervorrichtung an zwei oder mehr mit Zwischenraum zueinander längs derselben angeordneten Stationen verlässt.

31. Verfahren nach Anspruch 29, das folgende Schritte umfasst:
Veranlassen, dass ein mit den Teilchen einer Flüssigkeit beladenes Gas wesentlich in Horizontalrichtung durch jede der Filtermittelschichten hindurchgeht, so dass die Teilchen innerhalb der Filtermittelschichten zusammenwachsen, um eine flüssige Masse zu bilden, die nach unten abläuft, und
Veranlassen, dass die nach unten ablaufende Flüssigkeit ein unteres Ende jeder Filtermittelschicht verlässt und sich danach weg von der/den anderen Filterschicht(en) bewegt.

32. Verwendung einer Waschturm-Filtervorrichtung (5; 205; 305; 405) nach einem der Ansprüche 1 bis 26 beim Abscheiden von Nebel- oder Flüssigkeitsteilchen aus einem Gas in einem Waschturm einer Anlage.

33. Chemische/Werkstoffverarbeitungsanlage, die einen Waschturm einschließt, der eine Waschturm-Filtervorrichtung (5; 205; 305; 405) nach einem der Ansprüche 1 bis 26 umfasst.

## Revendications

1. Dispositif filtrant (5; 205; 305; 405) d'une tour de lavage destiné à séparer des particules de brouillard ou de liquide d'un gaz dans une tour de lavage d'une usine, le dispositif filtrant comprenant au moins un premier et un second lits filtrants fibreux (15; 206; 306; 406) empilés dans un espace annulaire (20) entre une première et une seconde structures tubulaires maillées ou ajourées (25, 30) essentiellement concentriques, au moins un élément essentiellement annulaire (35) étant prévu entre chaque lit filtrant fibreux (15; 206; 306; 406) adjacent, dans lequel, lors de l'utilisation, le dispositif filtrant (5; 205; 305; 405) est disposé suivant une orientation essentiellement verticale, les premier et second lits filtrants fibreux (15; 206; 306; 406) comprenant des lits filtrants fibreux supérieur et inférieur, respectivement, et dans lequel on prévoit, en outre, un moyen de guidage (51, 317, 328, 294, 429) associé au au moins un élément essentiellement annulaire (35) pour guider un liquide de manière à ce que, lors de l'utilisation, le moyen de guidage (51, 317, 328, 294, 429) reçoive un liquide s'écoulant depuis le lit filtrant fibreux supérieur (15, 206, 306, 406) et décharge ce liquide vers le bas en évitant le filtre fibreux inférieur (15, 206, 306, 406).

2. Dispositif filtrant (5; 205; 305; 405) selon la revendication 1, dans lequel chaque lit filtrant fibreux (15; 206; 306; 406) est essentiellement cylindrique.

3. Dispositif filtrant (5; 205; 305; 405) selon l'une quelconque des revendications précédentes, dans lequel les au moins premier et second lits filtrants fibreux (15; 206; 306; 406) comprennent au moins deux lits filtrants disposés de manière essentiellement concentrique, dans lequel, lors de l'utilisation, on fait passer du gaz ou de l'air à travers les lits concentriques en série ou à travers au moins un des lits concentriques.

4. Dispositif filtrant (5; 205; 305; 405) selon la revendication 3, dans lequel un élément annulaire (35; 216; 325; 425) est prévu à une extrémité d'au moins un ou de chaque lit concentrique.

5. Dispositif filtrant (5; 205; 305; 405) selon la revendication 3, dans lequel un élément annulaire unique (35) est prévu entre les extrémités adjacentes de lits concentriques adjacents.

6. Dispositif filtrant (5; 205; 305; 405) selon l'une quelconque des revendications précédentes, dans lequel les première et seconde structures tubulaires maillées ou ajourées concentriques (25, 30) comprennent chacune un élément tubulaire unique.

7. Dispositif filtrant (5; 205; 305; 405) selon la revendication 6, dans lequel le dispositif filtrant comprend un corps de filtre unique incluant au moins deux portions de filtre.

8. Dispositif filtrant (5; 205; 305; 405) selon l'une quelconque des revendications 1 à 5, dans lequel les première et seconde structures tubulaires maillées ou ajourées concentriques (25, 30) comprennent chacune au moins un premier et un second éléments tubulaires disposés bout à bout.

9. Dispositif filtrant (5; 205; 305; 405) selon l'une quelconque des revendications 1 à 5, dans lequel le dispositif filtrant (5; 205; 305; 405) comprend au moins deux portions de filtre connectées pour fournir un corps de filtre unique.

10. Dispositif filtrant (5; 205; 305; 405) selon la revendication 6, dans lequel l'élément/chaque élément annulaire (35) comprend un anneau.

11. Dispositif filtrant (5; 205; 305; 405) selon la revendication 10, dans lequel l'anneau/chaque anneau (35) est formé d'un matériau essentiellement résistant à la corrosion par les particules de brouillard ou de liquide ou par le gaz.

12. Dispositif filtrant (5; 205; 305; 405) selon la revendication 11, dans lequel l'anneau (35) est formé d'un matériau sélectionné entre un acier inoxydable et un matériau synthétique tel que le PTFE ou le polypropylène.

13. Dispositif filtrant (5; 205; 305; 405) selon l'une ou l'autre des revendications 7 ou 9, dans lequel, sur deux portions de filtre adjacentes, au moins une extrémité est pourvue d'une fermeture d'extrémité, la fermeture d'extrémité fournissant l'élément annulaire (325; 425).

14. Dispositif filtrant (5; 205; 305; 405) selon l'une quelconque des revendications 1 à 13, dans lequel le dispositif filtrant (5; 305) est adapté pour être suspendu de manière essentiellement verticale à un élément structurel (10; 310).

15. Dispositif filtrant (5; 205; 305; 405) selon l'une quelconque des revendications 1 à 13, dans lequel le dispositif filtrant (205) est adapté pour tenir debout de manière essentiellement verticale sur un élément structurel (210).

16. Dispositif filtrant (5; 205; 305; 405) selon l'une quelconque des revendications précédentes, dans lequel les structures tubulaires (25, 30) comprennent chacune un cylindre.

17. Dispositif filtrant (5; 205; 305; 405) selon l'une quelconque des revendications précédentes, dans lequel le dispositif filtrant (5; 205; 305; 405) est pourvu d'une extrémité d'entrée de gaz et d'une extrémité de sortie de gaz, l'extrémité de sortie de gaz incluant, facultativement, une plaque de fermeture (50; 321) transversale de manière à fermer l'intérieur de la structure tubulaire.

18. Dispositif filtrant (5; 205; 305; 405) selon l'une quelconque des revendications 1 à 17, dans lequel on fait circuler un gaz dans le sens ascendant ou descendant dans le dispositif filtrant (5; 205; 305; 405) depuis l'extérieur, le moyen de guidage comprend une gouttière (51) prévue sur un côté intérieur de la structure tubulaire de manière adjacente à l'élément/à chaque élément annulaire (35).

19. Dispositif filtrant (5; 205; 305; 405) selon l'une quelconque des revendications 1 à 17, dans lequel on fait circuler un gaz dans le sens ascendant ou descendant dans le dispositif filtrant (5; 205; 305; 405) depuis l'intérieur, le moyen de guidage comprend une gouttière (217) prévue sur un côté extérieur de la structure tubulaire de manière adjacente à l'élément/à chaque élément annulaire (216).

20. Dispositif filtrant (5; 205; 305; 405) selon l'une ou l'autre des revendications 18 ou 19, dans lequel, la/chaque gouttière (51; 217) est décalée verticalement vers le bas par rapport à l'élément annulaire respectif (35).

21. Dispositif filtrant (5; 205; 305; 405) selon l'une quelconque des revendications précédentes, dans lequel chaque élément annulaire (35) est collé sur au moins un lit filtrant fibreux adjacent (15), la colle étant essentiellement résistante aux particules de brouillard ou de liquide et au gaz.

22. Dispositif filtrant (5; 205; 305; 405) selon l'une quelconque des revendications 1 à 20, dans lequel chaque élément annulaire (35) comprend une extrémité durcie d'un lit filtrant fibreux (15).

23. Dispositif filtrant (5; 205; 305; 405) selon la revendication 22, dans lequel l'extrémité est durcie en plongeant préalablement l'extrémité dans un polymère fondu.

24. Dispositif filtrant selon la revendication 1, dans lequel le au moins un élément essentiellement annulaire comprend un moyen de structure d'extrémité (217; 325; 425) fournissant une fermeture d'extrémité de l'espace annulaire respectif.

25. Dispositif filtrant selon la revendication 1, dans lequel les lits filtrants supérieur et inférieur (206; 306; 406) ont essentiellement le même diamètre nominal et sont disposés verticalement et bout à bout et le au moins un élément essentiellement annulaire comprend un moyen de structure d'extrémité fournissant une fermeture d'extrémité des espaces annulaires respectifs.

26. Dispositif filtrant selon la revendication 1, comprenant un assemblage bout à bout (205; 305; 405) de filtres adaptés pour être utilisés dans une tour de lavage d'une usine, les filtres ayant une configuration essentiellement tubulaire allongée verticale, dans lequel des extrémités mutuellement adjacentes sont interconnectées par des éléments annulaires incluant une bride circulaire (217; 327; 427) fixée sur un des filtres, pourvue de trous sur un cercle de trous et décalée axialement par rapport à une face d'extrémité dudit un filtre au moyen d'un collier annulaire intégral adjacent au diamètre intérieur du filtre, de manière à ce que des éléments de fixation s'étendant à travers lesdits trous soient accessibles sur l'extérieur de l'assemblage de filtre (205; 305; 405).

27. Tour de lavage d'une usine comprenant un dispositif filtrant (5; 205; 305; 405) de tour de lavage selon l'une quelconque des revendications 1 à 26.

28. Tour de lavage selon la revendication 27, dans laquelle la tour de lavage comprend une tour de lavage d'une fonderie de cuivre, d'une usine de nitrate d'ammonium, d'une usine d'acide sulfurique ou d'une usine d'acide fluorhydrique.

29. Procédé de séparation de particules de brouillard ou de liquide d'un gaz dans une tour de lavage, comprenant les étapes consistant à:
fournir un dispositif filtrant (5; 205; 305; 405) de tour de lavage selon l'une quelconque des revendications 1 à 26;
faire passer le gaz contenant les particules de gaz ou de liquide à travers le dispositif filtrant (5; 205; 305; 405) soit de l'intérieur vers l'extérieur, soit de l'extérieur vers l'intérieur, de manière à faire en sorte que les particules de brouillard ou de liquide soient capturées par un des lits filtrants (15; 206; 306; 406).

30. Procédé selon la revendication 29, comprenant les étapes consistant à:
faire passer le gaz chargé en particules d'un liquide de manière essentiellement horizontale à travers le dispositif filtrant de manière à ce que lesdites particules se combinent, se heurtent, soient interceptées ou collectées, par diffusion brownienne ou une combinaison de ces phénomènes, à l'intérieur du filtre pour former une masse liquide qui s'écoule vers le bas; et
faire en sorte que le liquide s'écoulant vers le bas quitte le dispositif filtrant en deux ou plus de deux endroits mutuellement espacés le long du dispositif.

31. Procédé selon la revendication 29, comprenant les étapes consistant à:
faire passer un gaz chargé en particules d'un liquide de manière essentiellement horizontale à travers chacun des lits filtrants de manière à ce que lesdites particules se combinent à l'intérieur des lits filtrants pour former une masse liquide qui s'écoule vers le bas; et
faire en sorte que le liquide s'écoulant quitte chaque lit filtrant à une extrémité inférieure de celui-ci et évite ensuite l'autre (les autres) lit(s) filtrant(s).

32. Utilisation d'un dispositif filtrant (5; 205; 305; 405) de tour de lavage selon l'une quelconque des revendications 1 à 26 dans la séparation de particules de brouillard ou de liquide d'un gaz dans une tour de lavage d'une usine.

33. Usine de traitement de produits chimiques/matériaux incluant une tour de lavage comprenant un dispositif filtrant de tour de lavage selon l'une quelconque des revendications 1 à 26.
